# EUROPÄISCHE PATENTANMELDUNG

(11) **EP 0 669 205 A1**
(43) Veröffentlichungstag der Anmeldung: **30.08.1995**
(21) Anmeldenummer: 95101678.1
(22) Anmeldetag: 08.02.1995
(51) Int. Cl.: B32B 27/06, B32B 17/10, B32B 27/10

(54) **Verglasung**

(30) Priorität: 25.02.1994 DE 4406097
(71) Anmelder: DORNIER GmbH, D-88039 Friedrichshafen (DE)
(72) Erfinder: Braun, Rüdiger Dr., D-88048 Friedrichshafen (DE); Arnold, Manfred Dr., D-88074 Meckenbeuren (DE); Meisel, Thomas Dr., D-88697 Bermatingen (DE); Scherber, Wernder Dr., D-88697 Bermatingen (DE); Abersfelder, Dr. Gunter, D-71065 Sindelfingen (DE); Uhl, Stefan, D-70597 Stuttgart (DE)

(57) **Zusammenfassung**

Die Erfindung betrifft eine transparente Glas-/Kunststoff-Verbundscheibe, bestehend aus mindestens einer transparenten Kunststoffscheibe, mindestens einer Glasscheibe und einer haftvermittelnden Zwischenschicht zwischen Glasscheibe und Kunststoffscheibe, wobei die Glasscheibe eine Glasfolie mit einer Schichtdicke von 30 bis 1000 um ist.

## Beschreibung

Die Erfindung betrifft eine leichte, kratzfeste Verglasung.

Der Forderung nach Gewichtsreduzierung, insbesondere bei Fahrzeugen, steht in verstärktem Maße auch die Verglasung als begrenzender Faktor entgegen. Eine Verringerung des Gewichts ist bei der Verwendung herkömmlicher Gläser nicht möglich, da die damit verbundene Reduktion der Scheibendicke nicht ohne Abstriche an die Sicherheit der Fahrzeuginsassen durchgeführt werden kann. Eine Lösung ist daher nur durch die Verwendung anderer Materialien, insbesondere transparenter Kunststoffe wie Polycarbonat (PC) oder Polymethylmethacrylat (PMMA) in Aussicht. Diese weisen eine hohe Festigkeit und Schlagzähigkeit auf, haben im Vergleich zu Glas jedoch lediglich etwa 50% des spezifischen Gewichtes und somit einen erheblichen Gewichtsvorteil. Einem Einsatz der Kunststoffmaterialien steht jedoch, insbesondere deren geringe Beständigkeit gegen Kratzer, Abrieb, Chemikalien (Reinigungsmittel und UV-Strahlung sowie deren leichte Entflammbarkeit und Brennbarkeit, im Wege.

Es gibt inzwischen eine Reihe von Versuchen, Nachteile der Kunststoffe durch transparente dünne Hartbeschichtungen mit Si0₂, Ti0₂ etc. zu beseitigen. Diese Schichten werden in Aufdampf-, Sputter-, CVD-Technik oder in Sol-Gelverfahren aufgebracht. Da die so hergestellten Schutzfilme sehr dünn sind « 10 um), sind die Anforderungen an die Kratzfestigkeit und insbesondere an die Kerbfestigkeit bislang nicht zu erfüllen.

Aufgabe der Erfindung ist es, eine Verglasung zu schaffen, die einerseits den heute üblichen hohen Anforderungen an die Kerbfestigkeit, Kratzfestigkeit, Abriebfestigkeit, Chemikalienbeständigkeit und Umweltbeständigkeit genügt, und die gleichzeitig, ohne Beeinträchtigung der Sicherheit der Fahrzeuginsassen, erheblich leichter ist als herkömmliche Fahrzeugverglasungen.

Diese Aufgabe wird durch den Gegenstand des Hauptanspruchs gelöst. Die Unteransprüche betreffen vorteilhafte Ausgestaltungen.

Die Lösung besteht in einem Verbund aus einer Kunststoffscheibe und mindestens einer kratzfesten und abriebfesten, chemikalienbeständigen und umweltbeständigen Glasfolie, die keinen nennenswerten Beitrag zum Gesamtgewicht des Systems liefert. Zwischen transparenter Kunststoffscheibe und der Glasfolie ist eine haftvermittelnde Zwischenschicht angeordnet. Die Dicke der Glasfolie liegt erfindungsgemäß zwischen ca. 30 bis 1000 um, dabei insbesondere zwischen 300 und 700 um und in weiteren vorteilhaften Ausführungen zwischen 300 und 500 um. Derartige Glasfolien sind auch kommerziell erhältlich. Durch die äußere Glasfolie wird zusätzlich ein wirksamer Brandschutz erreicht, da der so ausgeführte Glasfolie/Kunststoffverbund weder leicht entflammbar noch leicht entzündbar ist. Dieses Schutzprinzip läßt sich auch auf weitere Kunststoffe neben PC und anwenden.

Die transparente Kunststoffscheibe wird bevorzugt auf der Basis von Polycarbonat, Copolycarbonat, Polyestercarbonat, Copolyestercarbonat, Poly-(meth)acrylat bzw. Polymethyl-(meth)acrylat als Kunststoffmaterial hergestellt. Sie weist in vorteilhaften Ausführungen eine Dicke von mindestens 1 mm, in weiteren bevorzugten Ausführungsformen auch größer als 3 mm auf.

Die haftvermittelnde Zwischenschicht besteht bevorzugt aus einem transparenten Kleber, insbesondere einem transparenten Harz oder einem transparenten Klebefilm.

Aufgrund des Aufbaus des Glas/Kunststoffverbundes können funktionelle Beschichtungen, wie z.B. elektrisch leitfähige Schichten zur Enteisung, Wärmeschutzschichten, elektrochrome Systeme, auf der Innenseite der Glasfolie zwischen Glas und Kunststoffscheibe zusätzlich aufgebracht und effektiv gegen äußere Einflüsse geschützt werden. Die Möglichkeit, diese Beschichtungen auf der Glasfolie aufzubringen, bietet zusätzliche prozeßtechnische Vorteile gegenüber dem Aufbringen auf Kunststoffen. Zum Beispiel sind thermische Belastungen für die Glasfolie weitaus unkritischer als für die Kunststoffplatten. Es sind somit mit den üblichen Beschichtungstechniken (Aufdampfen, Sputtern, CVD, Sol-Gel, ...) auch besser haftende Beschichtungen, die hohe Substrattemperaturen erfordern, machbar. Wegen der geringeren thermischen Ausdehnung im Vergleich zum Polymer sind auf Glas auch rißfreie Beschichtungen einfacher herstellbar. Bei sehr dünnen Glasfolien ist darüber hinaus eine "Endlosbeschichtung" der Glasfolien in Rollcoatern vorteilhaft durchführbar, was einen erheblichen Kostenvorteil gegenüber der Einzelbeschichtung konfektionierter Teile mit sich bringt.

Zur Herstellung biaxial gekrümmter Gläser wird vorteilhaft eine thermische Verformung der Glasfolien auf die endgültige Form z.B. in einer Art Tiefziehprozeß oder in einem gängigen Glasbiegeverfahren angewandt.

In einer vorteilhaften Ausbildung der Erfindung wird die ebene oder gebogene Glasfolie vor dem Zusammenfügen der einzelnen Bestandteile des Glas/Kunststoffverbundes vorgespannt. Zur Erzeugung der Vorspannung eignen sich insbesondere chemische Verfahren, z.B. chemisches Härten.

Erfindungsgemäß sind verschiedene Ausführungsformen des Glas/Kunststoffverbunds möglich.:
- Eine ebenfalls vorgeformte Kunststoffscheibe wird mit den vorgeformten Glasfolien mit Klebeharz oder einem transparenten Klebefilm verklebt.
- Der Kunststoff wird als flüssige Monomerlösung (Harz) zwischen die Glasfolien eingebracht und dann zum fertigen Verbund auspolymerisiert.
- Der Kunststoff wird als aufgeschmolzenes Polymer auf oder zwischen die Glasscheiben gebracht.

Es gibt darüber hinaus die Möglichkeit, die Haftung zwischen Glas und Polymer durch handelsübliche Haftvermittler zu optimieren. Vorteilhaft ist es auch, die auf Grund der unterschiedlichen thermischen Ausdehnung der Materialien auftretenden mechanischen Belastungen durch elastische Zwischenschichten, Kleberschichten abzufangen.

Die Möglichkeit, Kunststoffgläser einzusetzen, öffnet auch völlig neue gestalterische Möglichkeiten. So sind z.B. im Kraftfahrzeugbereich stark gekrümmte Seitenscheiben realisierbar, ohne dafür die Türstärke vergrößern zu müssen, um Raum für den Einlauf der starren, gebogenen Glasscheibe zu schaffen. Die Elastizität der Kunststoffverbundgläser ermöglicht es, die Scheibe beim Öffnen oder Schließen des Fensters zu biegen und sie so platzsparend, als gerade Scheibe, in der Tür unterzubringen.

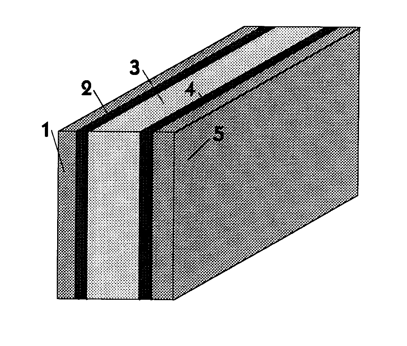

Der Erfindung wird nachfolgend anhand von Beispielen und einer Figur näher erläutert. Die Figur zeigt eine mehrschichtig aufgebaute Verglasung entsprechend der Erfindung.

Beispiel 1: Ausgehend von einer Polycarbonat-Scheibe 3 wird auf diese ein transparenter Klebefilm 2, 4 aufgebracht, z.B. mit einer Walzeinrichtung auflaminiert. Auf dieses Schichtpaket werden die Glasfolien 1, 5 ebenfalls z.B. durch Laminieren aufgebracht.

Beispiel 2: Ausgehend von einer Polycarbonat-Scheibe wird auf beiden Seiten nacheinander eine Glasfolie mit einem transparenten Flüssigkleber aufgebracht.

Beispiel 3 Ausgehend von zwei Glasfolien, die am Rand mit beispielsweise Butylkautschuk, transparentem Klebefilm oder ähnlichen Mitteln abgedichtet sind, wird der Zwischenraum mit einer Lösung aus Monomer (z.B. Methacrylsäure) und einem Photostarter (ca. 1-5%) vollständig gefüllt. Durch Belichtung der Scheibe mit einer UV-Lampe wird die Lösung in üblicher Weise auspolymerisiert. Hierbei bildet sich ein Glasfolie-PMMA-Verbund.

Beispiel 4: Abweichend von Beispiel 3 läßt sich bei Verwendung einer Lösung aus Monomer und thermischer Starter (z.B. Abzobisisobutyronitril) durch Erhöhung der Temperatur auf ca. 60 _{°} C die Polymerisation auslösen und so einen Verbund herstellen.

Beispiel 5: Zu den in Beispielen 3, 4 eingesetzten Lösungen lassen sich zusätzlich Haftvermittler (z.B. 3-Methacryloxypropyl-trimethoxysilan, 0,1 bis 10%) einbringen, die die Haftung zwischen Glas und Polymer verbessern. Deren Wirkung kann durch eine zusätzliche Aktivierung der Glas- oder Kunststoffoberflächen, wie z.B. chemische Aktivierung, Plasmabehandlung oder Coronabehandlung etc. noch verstärkt werden.

Beispiel 6: Ausgehend von einer Glasfolie wird auf diese eine Polycarbonatschmelze aufgebracht und darauf im noch flüssigen Zustand die zweite Glasfolie auflaminiert. Nach Abkühlung der Scheibe ist ein fester PC/Glasverbund entstanden.

Der Erfindungsgegenstand findet Anwendung in der Verglasung von Fahrzeugen, Schienenfahrzeugen, Flugzeugen, Schiffen und Gebäuden oder leichten Panzergläsern. Ebenso kann er als leichte, kratzfeste und abriebfeste Scheinwerferabdeckung eingesetzt werden.

## Patentansprüche

1. Transparente Glas-/Kunststoff-Verbundscheibe, bestehend aus mindestens einer transparenten Kunststoffscheibe, mindestens einer Glasscheibe und einer haftvermittelnden Zwischenschicht zwischen Glasscheibe und Kunststoffscheibe, dadurch gekennzeichnet, daß die Glasscheibe eine Glasfolie mit einer Schichtdicke von 30 bis 1000 um ist.

2. Verbundscheibe nach Anspruch 1, dadurch gekennzeichnet, daß die Glasfolie eine Dicke von von 300 bis 700 um aufweist.

3. Verbundscheibe nach einem der Ansprüche 1 oder 2, dadurch gekennzeichnet, daß die Glasfolie vorgespannt ist.

4. Verbundscheibe nach Anspruch 3, dadurch gekennzeichnet, daß die Vorspannung der Glasfolie durch eine chemische, Behandlung, z.B. durch chemisches Härten erzeugt ist.

5. Verbundscheibe nach einem der Ansprüche 1 bis 4, dadurch gekennzeichnet, daß die Kunststoffscheibe eine Dicke von mindestens 1 mm aufweist.

6. Verbundscheibe nach einem der Ansprüchen 1 bis 5, dadurch gekennzeichnet, daß die haftvermittelnde Zwischenschicht ein transparenter Kleber, insbesondere ein transparentes Harz, oder ein transparenter Klebefilm ist.

7. Verbundscheibe nach einem der vorangehenden Ansprüche, dadurch gekennzeichnet, daß sie mindestens eine Schichtenfolge Glasfolie, haftvermittelnde Zwischenschicht, Kunststoffscheibe, zweite haftvermittelnde Zwischenschicht und zweite Glasfolie aufweist.

8. Verbundscheibe nach einem der vorangehenden Ansprüche, dadurch gekennzeichnet, daß die transparente Kunststoffscheibe auf Basis von Polycarbonat, Copolycarbonat, Polyestercarbonat, Copolyestercarbonat, Poly(meth)-acrylat bzw. Polymethyl-(meth)acrylat als Kunststoffmaterial hergestellt ist.

9. Verbundscheibe nach einem der vorangehenden Ansprüche, dadurch gekennzeichnet, daß die Kunststoffscheibe auf Basis eines thermoplastischen Polymers hergestellt ist.

10. Verbundscheibe nach einem der vorangehenden Ansprüche, dadurch gekennzeichnet, daß die Kunststoffscheibe durch direkte Polymerisation zwischen zwei begrenzenden Glasfolien hergestellt ist, wobei die Innenflächen der Glasfolien mit der haftvermittelnden Zwischenschicht versehen sind.

11. Verbundscheibe nach einem der vorangehenden Ansprüche, dadurch gekennzeichnet, daß eine oder mehrere Oberflächen der Kunststoffscheibe und/oder der Glasfolie mit einer oder mehreren funktionellen Beschichtungen, wie einer elektrisch leitfähigen Schicht, Wärmeschutzschicht, oder einem elektrochromen System, versehen sind.

12. Verbundscheibe nach einem der vorangehenden Ansprüche, dadurch gekennzeichnet, daß sie eine gekrümmte Oberfläche aufweist.
